# EUROPEAN PATENT SPECIFICATION

(11) **EP 0 488 163 B1**
(45) Date of publication and mention of the grant of the patent: **07.02.1996**
(21) Application number: 91120179.6
(22) Date of filing: 26.11.1991
(51) Int. Cl.: B60L 7/22

(54) **Electric vehicle control apparatus**
Regelvorrichtung für ein elektrisches Fahrzeug
Dispositif de commande pour un véhicule électrique

(30) Priority: 28.11.1990 JP 322879/90
(43) Date of publication of application: 03.06.1992
(73) Proprietor: HITACHI, LTD., Chiyoda-ku, Tokyo 101 (JP)
(72) Inventor: Kotake, Kazuyoshi, Katsuta-shi (JP); Ito, Ken, Katsuta-shi (JP)
(74) Representative: Patentanwälte Beetz - Timpe - Siegfried Schmitt-Fumian - Mayr

(56) References cited:
- GB-A- 2 117 195
- PATENT ABSTRACTS OF JAPAN vol. 7, no. 221 (M-246)(1366) 30 September 1983 ; & JP-A-58 116 002
- PATENT ABSTRACTS OF JAPAN vol. 11, no. 269 (M-621)(2716) 2 September 1987 ; & JP-A-62 071 404
- PATENT ABSTRACTS OF JAPAN vol. 12, no. 120 (M-685)(2967) 14 April 1988 ; & JP-A-62 247 701
- PATENT ABSTRACTS OF JAPAN vol. 14, no. 33 (M-923) 22 January 1990 ; & JP-A-1 270 702
- PATENT ABSTRACTS OF JAPAN vol. 10, no. 304 (M-526)(2360) 16 October 1986 ; & JP-A-61 116 906

## Description

This invention relates to an electric vehicle control apparatus according to the preamble of independent claim 1. Such an apparatus is known from GB-A-2 177 195. In particular, the invention relates to dynamic brake control during a period when the regenerative braking load is ineffectual.

For an electric vehicle equipped with an induction motor controller based on the VVVF, inverter or a d.c. motor controller based on the thyristor chopper, it is possible to perform regenerative brake control by operating the motor as a generator so that the generated power (including the a.c. power converted by a converter) is fed back to the catenary. The regenerative brake control takes place without any problem provided that a powering car which serves as a load exists in the feeder section where the regenerating car exists, however, in case the powering car quits driving or in case it enters another feeder section, it fails to regenerate power, causing the filter capacitor connected in parallel between the controller and the catenary to have a rising voltage which destroys switching elements in the controller.

This problem is overcome by a technique described in Japanese Patent Unexamined Publication No. 58-116002, which is designed such that when the filter capacitor voltage has reached the maximum value within the harmless range for the devices in the main circuit, a switching control element connected in series with a resistor, with this serially connected member being connected in parallel with the filter capacitor, is turned on so as to shunt the generated current and, on expiration of a certain time length, the switching control element is turned off.

A technique described in Japanese Patent Unexamined Publication No. 62-71404 is designed such that in response to the detection of an excessive filter capacitor voltage, the line breaker is opened, the inverter is disactivated and an overvoltage suppressing thyristor connected in parallel to the filter capacitor is turned on so as to lower the filter capacitor voltage and, on expiration of a certain time length, the thyristor is turned off, the line breaker is closed, and the operation of the inverter is resumed.

A further technique described in Japanese Patent Unexamined Publication No. 62-247701 is designed such that at a time point when the filter capacitor voltage reaches a value, which is set higher than the rated catenary voltage, the dynamic braking chopper has its conduction ratio controlled in response to the filter capacitor voltage so as to supplement an insufficient regenerative braking load.

The above-mentioned technique described in Japanese Patent Unexamined Publication No. 58-116002 is designed to fully turn on the switching control elements at a time point when the filter capacitor voltage reaches the maximum value, and therefore in case the powering car declines progressively, in other words when the regenerative brake force diminishes progressively, the operation enters the dynamic brake mode abruptly, creating an enormous torque variation. The switching control elements are turned off on expiration of a certain time length after the time of turn-on, while the inverter is kept operating, and therefore if the regenerative braking load is absent at the time of turn-off, the filter capacitor voltage will further rise, resulting possibly in the breakdown of the switching control elements and the elements of the inverter. In the opposite case where the regenerative braking load is established in several milliseconds, regeneration of power does not take place before expiration of the certain time length and therefore the conservation of energy is not attained. Although the train will conceivably come to a stop on expiration of the certain time length during a low-speed operation, this assumption is not practical. Moreover, this case will encounter the need of an increased capacitance of the dynamic braking resistor, which will be difficult to install under the floor of the electric vehicle.

The regeneration thyristors are merely controlled to turn on and off based on a setup threshold value, and therefore when regeneration becomes ineffectual and the regeneration thyristors are turned on, the voltage will fall abruptly. This does not matter so far as the inverter operates to supplement the deficient component, however, if the current supplied by the inverter is not enough, the inverter control system will operate on assumption that the catenary voltage has fallen, but the response is slow. In the meantime, the current from the catenary flows in, incurring the emergence of resonation attributable to the filter capacitor and the inductance of the filter reactor and the like. If the inverter starts operating to increase the current when the filter capacitor voltage is too low, the current will become excessive, incurring the state of unstable control and ultimately the operation of the line breaker.

The technique described in the Japanese Patent Unexamined Publication No. 62-71404 mentions nothing about the state of no-brake which emerges in the transition from the open state to the closed state of the line breaker which is slow in operation relative to the switching control elements.

The technique described in the Japanese Patent Unexamined Publication No. 62-247701 considers nothing for the case of a further rise of the filter capacitor voltage up to the over voltage for the control system, which will ultimately incur the breakdown of elements.

GB-A- 2 117 195 discloses an electric brake system for electric rolling stock. The brake system comprises a filter condensor and a chopper connected in parallel thereto. If the voltage across the condenser exceeds a first level, the regenerative current of the motor is reduced. If a second, higher level is exceeded, the regenerative current is reduced to a minimum value. If a third and again higher level is exceeded, the chopper is operated in accordance with the regenerative current of the motor.

The present invention is intended to overcome the foregoing prior art deficiencies, and its main object is to provide a braking apparatus for an electric vehicle capable of significantly suppressing the torque variation at braking, and operating in reversible control so that even if the over voltage emerges, the system can swiftly get out of that state and resume the dynamic braking or regenerative braking operation. Such an apparatus extends the operating live of mechanical components such as brake shoes and a line breaker.

This object is solved in accordance with the features of claim 1. Dependent claims are directed on preferred embodiments of the invention.

Provided is a control means which operates electric braking, the dynamic braking chopper in at least three divided modes of stopping control, chopping control and full conduction control in correspondence to voltages of the filter capacitor.

The dynamic braking chopper bases its operation on the voltage of the filter capacitor, i.e., it reflects full regenerative braking, regenerative braking and dynamic braking in combination, or the state of over voltage at ineffectual regeneration, to perform the stopping control, chopping control or full conduction control, and the operation shifts smoothly from regeneration to combination, to over voltage, to combination, and to regeneration. Accordingly, reversible control is accomplished, instead of the conventional non-reversible control in which the vehicle driver needs to have a reset operation after the operation has entered the state of over voltage.

Preferred embodiments of the present invention will now be described in conjunction with the accompanying drawings, in which:
Fig. 1 is a block diagram showing the main circuit and an embodiment of this invention;
Fig. 2 is a flowchart;
Fig. 3 is a waveform diagram for the synchronizing means;
Fig. 4 is a diagram showing the waveforms of the voltage, currents and conduction ratios at various portions;
Fig. 5 is a diagram showing another embodiment of this invention; and
Fig. 6 is a waveform diagram pertinent to Fig. 5.

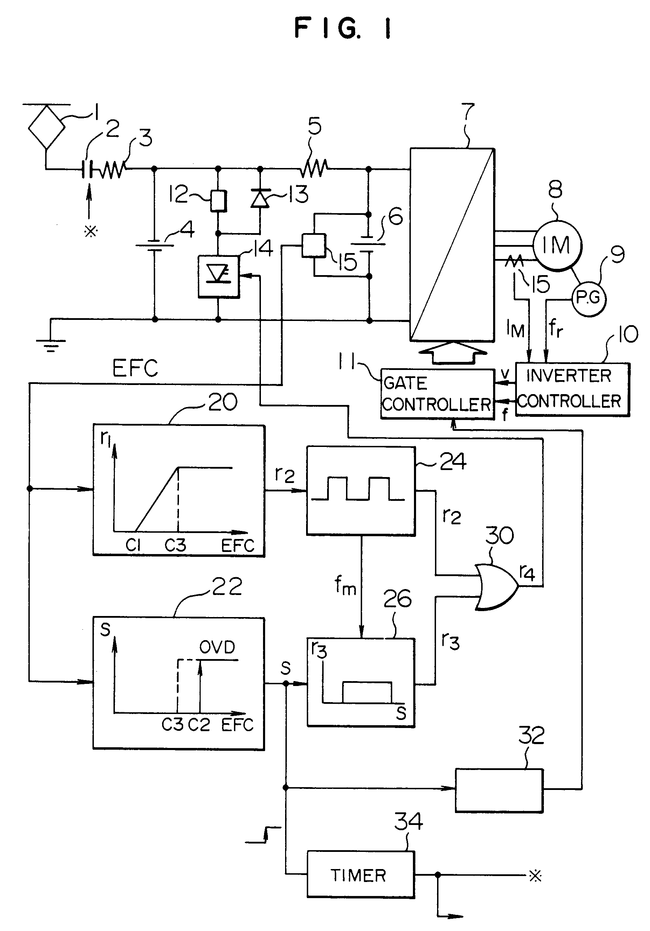

An embodiment of this invention will be explained with reference to Fig. 1.

A d.c. current collected with a pantograph 1 is fed through a line breaker 2, first inverted L-type filter formed of a reactor 2 and filter capacitor 4, and a second inverted L-type filter formed of a reactor 5 (having an inductance about 1/10 that of reactor 3) and a filter capacitor 6, and then supplied to an inverter 7 which produces 3-phase a.c. power of a variable voltage and variable frequency.

The 3-phase a.c. power produced by the inverter 7 drives an induction motor 8. An inverter controller 10 operates to adjust the slip frequency fₛ so that the difference of the motor current I_{M} detected by a current transformer 15 from the motor current command I_{P} (not shown) is zero, and add the slip frequency fₛ to the motor rotational frequency fᵣ provided by a pulse generator 9 which detects the number of revolutions of the induction motor 8 thereby to evaluate the inverter frequency f_{INV}. The inverter frequency f_{INV} and an output voltage command V which is proportional to the inverter frequency f_{INV} are entered to a gate controller 11. The gate controller 11, which receives the inverter frequency f_{INV} and output voltage V, implements PWM modulation which is known in the art thereby to control switching elements (gate turn-off thyristors, etc.) which form the inverter 7. The foregoing is the operation at driving.

The inverter 7 enters the regenerative brake mode in response to a brake command sent from the operation console (not shown). In the regenerative brake mode, the inverter controller 10 subtracts the slip frequency fₛ from the motor rotational frequency fᵣ to evaluate the inverter frequency f_{INV}, and delivers the result to the gate controller 11. Consequently, the induction motor 8 operates as an induction generator, and d.c. power is fed to the power source through the inverter 7. The power is fed to the catenary by way of the second filter, first filter and line breaker 2. As mentioned previously, when there is a powering car which serves as a regenerative braking load in the same feeder section, the operation takes place without any problem, but if the car which has consumed the regenerative power no more exists, the regenerative current decreases in proportion, causing the voltage of the filter capacitors 4 and 6 to rise.

This rising voltage not only incurs a degraded brake force, but can destroy switching elements which constitute the inverter 7. In dealing with this matter, a dynamic braking resistor 12 and a dynamic braking chopper 14 in serial connection are connected in parallel to these filter capacitors 4 and 6, with the dynamic braking chopper 14 being turned on and off so as to supplement the deficiency of regenerative braking load. Indicated by 13 is a free wheeling diode which is intended to circulate the current when the dynamic braking chopper 14 is turned off. A circuit which resembles the foregoing main circuit is described in Japanese Patent Unexamined Publication No. 1-270702.

A voltage sensor 15 detects the voltage across the filter capacitor 6 and delivers the output to a limiter circuit 20 and an over voltage detection (OVD) circuit 22.

The limiter circuit 20 stores values of conduction ratio δ of the dynamic braking chopper (will be termed "conduction ratio δ") in correspondence to filter capacitor voltages EFC (the circuit may be designed to calculate the values instead of storing them).

When the filter capacitor voltage EFC exceeds a setup value C1 (e.g., C1=1700 volts for an average catenary voltage of 1500 volts), a demand of conduction ratio δ₁ is produced, which increases in proportion to the filter capacitor voltage EFC until a setup value C3 (C3=1800 volts for the above catenary voltage; no current flows reversely from the catenary at this voltage) is reached (0.1 ≦ δ₁ ≦ 0.9).

The over voltage detection circuit 22 produces a signal S when the filter capacitor voltage EFC exceeds a setup value C2 of over voltage (C2=2000 volts for the above catenary voltage). The circuit 22 quits the output of the signal S when the filter capacitor voltage EFC falls below the above-mentioned setup value.

The reason for the provision of the over voltage detection circuit 22 is that the filter capacitor voltage EFC increases in the time domain of the order of milliseconds, whereas the dynamic braking chopper 14 has its pulse width responding slowly in the time domain of the order of several tens milliseconds, and and the chopper is brought to a full conduction (conduction ratio of 1) in order to prevent the elements from being destroyed due to a further increase of the filter capacitor voltage EFC before the chopper responds.

The conduction ratio demand value δ₁ is entered to a phase shifter 24 which also functions to ensure the minimum on and minimum off pulse widths, and it produces a conduction ratio demand δ₂ in the form of a pulse.

The over voltage detection circuit 22 has its output S delivered to a continuous pulse generator 26, gate turn-off circuit 6 and timer 34.

The continuous pulse generator 26 responds to the signal S to produce a continuous pulse signal δ₃, and it quits the output of the continuous pulse signal δ₃ in response to the subsidence of the signal S. At this time, it receives a timing signal tₘ and synchronizes the signal δ₃ with the conduction ratio demand δ₂ so as to ensure the minimum on and minimum off pulses.

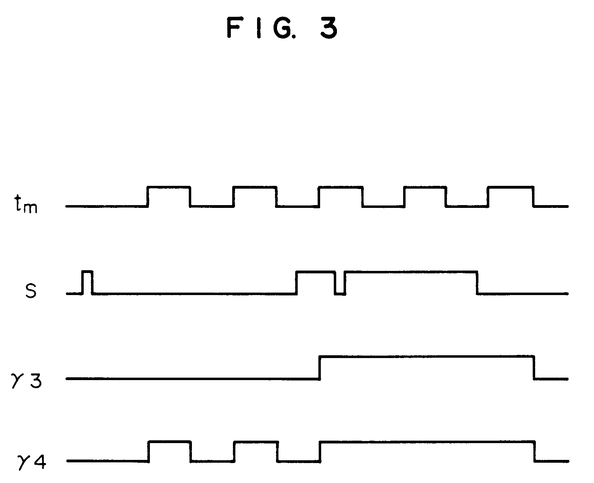

Fig. 3 shows the waveforms of the pulse signals. Indicated by fₘ is a sync signal. The signal S causes the output of the conduction ratio demand δ₃ such that the conduction ratio demand δ₂ rises at a rise of the sync signal fₘ in the presence of the signal S and the conduction ratio demand δ₂ is kept active even after the signal S has fallen until the sync signal fₘ falls.

In response to the reception of the signal S, the gate turn-off circuit 32 has its output fed to the gate controller 11, which then disactivates the gate of the inverter 7 during the active period of the signal S. For example, the output of the gate controller 11 and the output of the gate turn-off circuit 32 are taken AND and the result is applied to the inverter 7 so that the gate is disactivated (in this case, the gate turn-off circuit 32 produces an OFF pulse in the presence of the signal S or an ON pulse in the absence of the signal S). The minimum on pulse may not be ensured in some cases, and in this event only elements immediately after turn-on need to be cut off by application of the technique described in Japanese Patent Unexamined Publication No. 59-63983.

On receiving the signal S, the timer 34 starts the time count at a rise of the signal S, and it clears the count at a fall of the signal S. In case the timer is not cleared within a certain time length (e.g., 2 µs), i.e., in case the signal S does not subside, the timer 34 issues an off signal to the line breaker 2 and an air brake activation command (not shown).

In response to the reception of the conduction ratio demand δ₂ and signal δ₃, an OR gate 30 produces a conduction ratio demand δ₄ as a result of the logical OR operation for the inputs, and delivers the signal to the dynamic braking chopper 14.

The dynamic braking chopper 14 operates to be full turn-off when the filter capacitor voltage EFC is smaller than the setup value C1, operates to maintain a constant filter capacitor voltage EFC when it is equal to or greater than the setup value C1 and equal to or smaller than C3, or operates to be full turn-on when it is equal to or greater than C2.

The reason for the setup value C2 for over voltage detection and C3 for cancellation is to prevent the dynamic braking chopper 14 from entering the chopping mode immediately after the full conduction state and to confirm a sufficient fall of the voltage, and this setup value C3 may be equal to the setup value C1 at a risk of a prolonged no-brake period. It is not desirable to have the setup value C3 smaller than the setup value C1 because of the emergence of such problem as a reverse current flow from the power source.

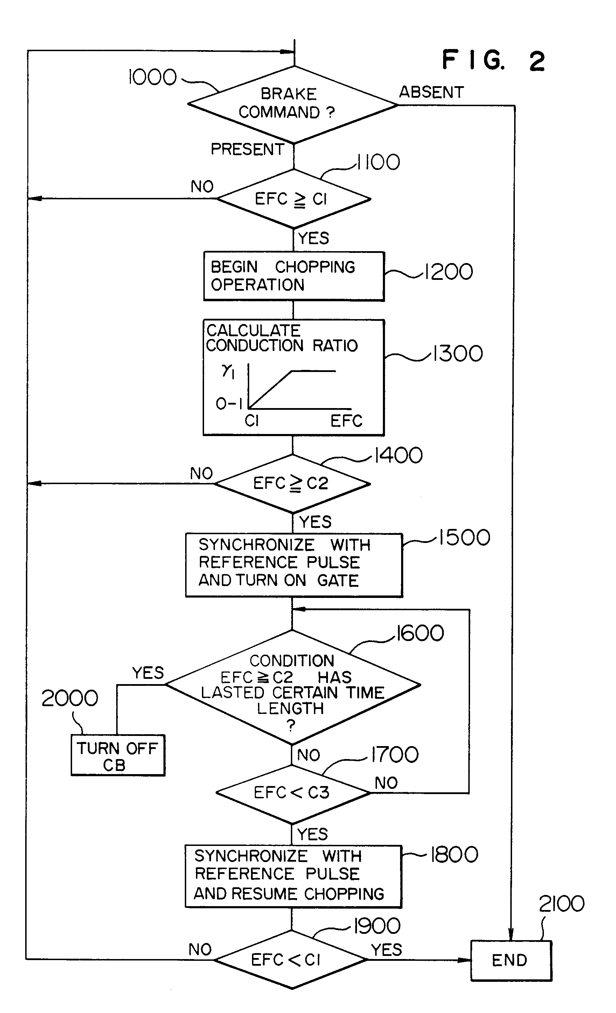

Next, the operation of the inventive apparatus will be explained with reference to th flowchart of Fig. 2.

Step 1000 tests the presence or absence of the brake command, and the sequence proceeds to step 1100 in the case of "present". Step 1100 compares the filter capacitor voltage EFC with the setup value C1, and, in the case of EFC ≧ C1, step 1200 operates on the dynamic braking chopper 14 to commence the chopping operation. In the case of EFC < C1, the sequence loops back to step 1000, and a sufficient regenerative braking load exists during the period of looping.

Step 1300 calculates the conduction ratio, and it evaluates a conduction ratio demand δ₁ which is proportional to the filter capacitor voltage EFC. Step 1400 compares the filter capacitor voltage EFC with the setup value C2 so as to test the over voltage state (OVD). If the test result is "NO", the sequence returns back to step 1000, and the calculation of the conduction ratio demand takes place on detecting the presence or absence of the brake command. If the test result is "YES", step 1500 synchronizes the demand signal with the reference pulse (the pulse with the currently produced conduction ratio) in order to ensure the minimum on and minimum off pulses, and brings the dynamic braking chopper 14 to the on state. Step 1600 measures (counts) the period of EFC ≧ C2, and in the case of excessiveness, step 2000 turns off the line breaker 2 and at the same time activates the air brake.

In the case of EFC ≧ C3 in step 1700, the sequence returns to step 1600 for counting. In the case of EFC < C3, the sequence proceeds to step 1800, which takes synchronization by the same reason as step 1500 and resumes chopping with a pulse width proportional to the filter capacitor voltage EFC. Step 1900 tests whether or not EFC is smaller than C1, and if the result is "YES" indicative of the recovery of the regenerative braking load, the dynamic brake control is terminated. If the test result is "NO", the sequence returns to step 1000 to continue the dynamic brake control.

Although the foregoing embodiment is the case of the over voltage detection circuit 22 operating on a software basis, it may be a hardware arrangement. In this case, the flowchart of Fig. 2 is satisfied by treating the signal S as an interrupt signal. This arrangement can speed up the imminent over voltage process.

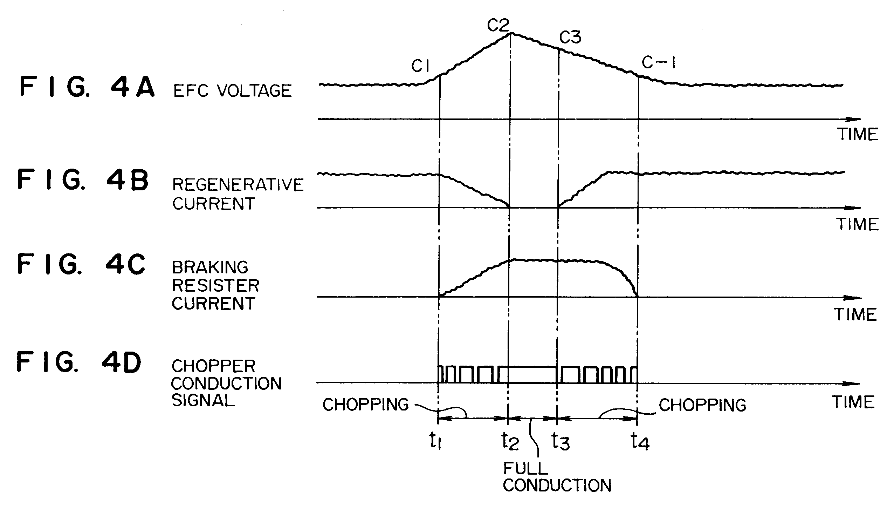

Next, the operational waveforms of the inventive arrangement will be explained with reference to Fig. 4.

The horizontal axis is the time axis, and on the vertical axis, shown by (a) is the filter capacitor voltage, (b) is the regenerative current flowing to the catenary, (c) is the dynamic braking resistor current, and (d) is the conduction ratio demand signal to the dynamic braking chopper.

At a time before time point t₁, a regenerative braking load exists and the electric vehicle produces a torque based on the brake command sent from the operation console of the vehicle. The regenerative braking load begins to diminish immediately before the time point t₁, and when the prescribed torque is no more produced at the time point t₁ when the filter capacitor voltage EFC reaches the setup value C1, the dynamic braking chopper 14 commences the chopping operation. The dynamic braking chopper 14 has its conduction ratio δ adjusted so that the filter capacitor voltage at that time point is retained. When the regenerative braking load further declines, causing the filter capacitor voltage to rise, the dynamic braking chopper operates at a conduction ratio proportional to the voltage rise. When the regenerative braking load virtually subsides at time point t₂, the filter capacitor voltage EFC reaches the setup value C2, and at this time point the dynamic braking chopper is given a conduction ratio of one (full conduction) and at the same time the operation of the inverter is halted. Losing the power source, the filter capacitor voltage EFC necessary to make full conduction of the dynamic braking chopper 14 falls, and it reaches the setup value C3 at time point t₃. At this time point, the dynamic braking chopper 14 commences chopping and the inverter 7 is controlled to produce a torque in compliance with the brake command.

Although the figure reveals that the regenerative braking load rises and the regenerative current increases at the time point when the filter capacitor voltage EFC has reached the setup value C3, this embodiment is designed to activate the inverter 7 and operate on the dynamic braking chopper 14 to chop at the time point when the filter capacitor voltage EFC has fallen to the setup value c3 regardless of the presence or absence of the regenerative current. As the regenerative braking load increases, the regenerative current increases and the filter capacitor voltage EFC falls. The falling voltage EFC is followed by a decrease in the conduction ratio of the dynamic braking chopper 14. When the filter capacitor voltage EFC reaches the setup value C1, indicative of the existence of a sufficient regenerative braking load, the dynamic braking control is quitted.

When the regenerative braking load subsides again, the dynamic brake control and over voltage control take place.

According to this embodiment, the inverter can generate a current enough to produce the prescribed torque determined by the brake notch even in the event of ineffectual regeneration, and consequently the excessive voltage can be suppressed promptly without applying the air brake unnecessarily even in the event of over voltage and the electric brake (regeneration plus dynamic brake) can be established immediately after the recovery of regenerative braking load. The operation of the line breaker is suppressed even in the event of ineffectual regeneration, and therefore the mechanical components can have an extended operational life.

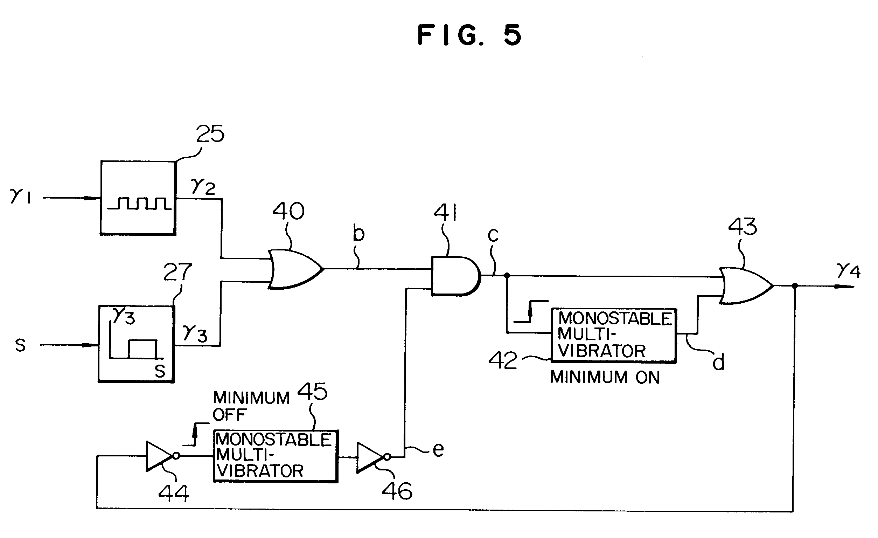

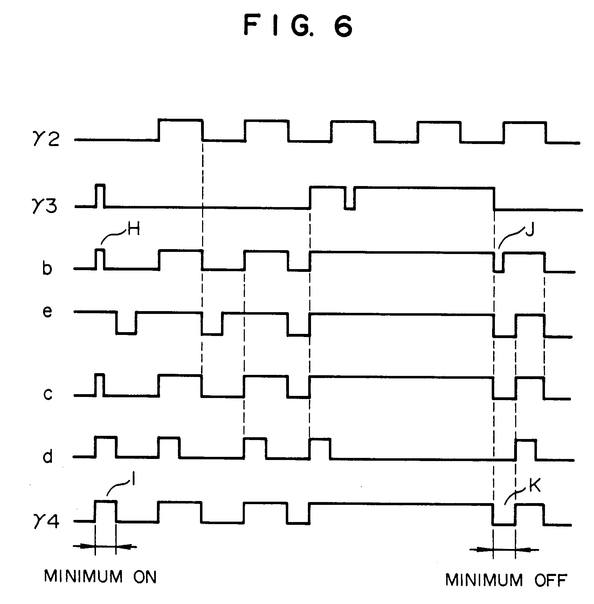

In the foregoing embodiment, the output of the continuous pulse generator 26 is synchronized with the conduction ratio demand δ₂ by using the timing signal tₘ from the phase shifter 24. This circuit arrangement causes the synchronizing operation to wait until the next timing of synchronization even though sufficient minimum on/off pulses are ensured. The following explains, with reference to Fig. 5 and Fig. 6, an embodiment which is intended to ensure the minimum on/off pulses without taking synchronization.

A phase shifter 25 and continuous pulse generator 27 receive the conduction ratio demand δ₁ provided by the limiter circuit 20 and the signal S provided by the over voltage detection circuit 22, respectively, and deliver their respective outputs δ₂ and δ₃ to an OR gate 40, which produces a signal b. An AND gate 41 receives the signals b and e, and produces a signal c. A monostable multivibrator 42 is triggered by the rising edge of the signal c to produce a one-shot pulse d which is used to ensure the minimum on-time of the dynamic braking chopper 14. An OR gate 43 takes OR of the signals c and d, and produces a conduction ratio demand δ₄. A NOT gate 44 inverts the conduction ratio demand pulse δ₄, and delivers the result to a monostable multivibrator 45. The monostable multivibrator 45 is triggered by the falling edge of the conduction ratio demand pulse δ₄ to produce a one-shot pulse, which is used to ensure the minimum off-time of the dynamic braking chopper, and delivers the pulse to the AND gate 41 through a NOT gate 46.

Fig. 6 shows the waveforms of the abovementioned signals.

The conduction ratio signals δ₂ and δ₃ produce an inherent output waveform shown by b, however, this output does not ensure the minimum on/off times of the elements in some cases. (H and J denote pulses narrower than the minimum on and minimum off time lengths, respectively.) The waveform of the resulting conduction ratio demand δ₄ reveals the ensured minimum on/off time lengths for the corresponding pulses I and K.

According to this embodiment, the conduction ratio demands δ₂ and δ₃ are produced independently and therefore the signal S can be transmitted surely to the dynamic braking chopper.

Although the foregoing embodiments are the case where the motor is an induction motor and the controller is an inverter, this invention is not confined to this case, but is also applicable to other control apparatus capable of regenerating power, e.g., a d.c. motor controller based on a chopper, to attain the similar effectiveness.

Although in the foregoing embodiments the catenary is of d.c. power, the similar effectiveness is attained for the case where a.c. power is converted to d.c. power with a convertor.

Moreover, although the foregoing embodiments have the provision of two filters, these are merely intended to stabilize the control system, and naturally the apparatus can be configured with a single filter.

According to this invention, the electric braking operation can be shifted reversely from electric braking to regenerative braking, and vice versa, without Opening the line breaker or applying the air brake even in the event of ineffectual regeneration and ultimate over voltage, whereby the domain of regenerative braking after the emergence of over voltage, which is forbidden conventionally, can be extended to the maximum.

As a result, the torque variation can be suppressed and the operating life of such mechanical components as brake shoes and line breaker can be extended.

## Claims

1. An electric vehicle control apparatus comprising an electric motor (8) which drives an electric vehicle, a motor controller (7) which controls said electric motor (8), a filter capacitor (6) connected between said motor controller (7) and a power source, a dynamic braking resistor (12) and a dynamic braking chopper (14) in serial connection connected in parallel to said filter capacitor (6), means (15) for detecting the voltage of said filter capacitor (6) and chopper control means (20-30) for controlling said dynamic braking chopper (14) in chopping mode if the detected voltage value is equal to or greater than a first setup value which is higher than the average voltage of said power source,
**characterized** in that
in the chopping mode the conduction ratio of the chopper (14) is controlled in accordance with the detected d.c. voltage, and that the chopper control means (20-30) adjusts a full conduction mode if the detected voltage value is equal to or greater than a second setup value which is greater than said first setup value, and
means are provided for halting the operation of said motor controller if a detected voltage value is equal to or greater than said second setup value.

2. An apparatus according to claim 1,
characterizted in that
the motor controller (7) is an inverter and the electric motor (8) is an induction motor.

3. An apparatus according to claim 1,
characterized in further comprising
means for turning off a breaker (2) in the case when the time when said d.c. voltage is higher than said second setup value continues for more than an predetermined time.

4. An apparatus according to claim 1,
charaterized in further comprising
means for using the air brake in the case when the time when said d.c. voltage is higher than said second setup value continues for more than the predetermined time.

5. An apparatus according to claim 1,
characterized in that
the chopper control means control the chopper in chopping mode in case the detected voltage value falls to a value which is equal to or smaller than a third setup value which is equal to or greater than said first setup value and smaller than said second setup value.

## Patentansprüche

1. Elektrische Fahrzeugsteuervorrichtung mit einem Elektromotor, der ein elektrisches Fahrzeug antreibt, einer Motorsteuereinheit (7), die den Elektromotor (8) steuert, einem Filterkondensator (6), der zwischen der Motorsteuereinheit (7) und einer Leistungsquelle angeordnet ist, einem dynamischen Bremswiderstand (12) und einem dynamischen Bremsunterbrecher (14), die in Serie zueinander parallel mit dem Filterkondensator (6) verbunden sind, Mitteln (15) zum Erfassen der Spannung des Filterkondensators (6) und Unterbrechersteuermittel (20-30) zum Steuern des dynamischen Bremsunterbrechers (14) in einem Unterbrechungsmodus, wenn der erfaßte Spannungswert gleich oder größer ist als ein erster Einrichtungswert, der größer ist als die Durchschnittsspannung der Leistungsquelle,
dadurch gekennzeichnet, daß
das Leitungsverhältnis des Unterbrechers (14) im Unterbrechungsmodus gemäß der erfaßten Gleichstromspannung gesteuert wird und daß die Unterbrechersteuermittel (20-30) einen Volleitungsmodus einstellen, wenn der erfaßte Spannungswert gleich oder größer ist als ein zweiter Einrichtungswert, der größer ist als der erste Einrichtungswert, und
Mittel zum Aussetzen des Betriebs der Motorsteuereinheit vorgesehen sind, wenn ein erfaßter Spannungswert gleich oder größer ist, als der zweite Einrichtungswert.

2. Vorrichtung nach Anspruch 1, dadurch gekennzeichnet, daß die Motorsteuereinheit (7) ein Inverter ist und der Elektromotor ein Induktionsmotor.

3. Vorrichtung nach Anspruch 1, dadurch gekennzeichnet,
daß die Vorrichtung ferner
Mittel zum Abschalten eines Unterbrechers (2) enthält, wenn die Gleichstromspannung größer ist als der zweite Einrichtungswert und dies länger als eine vorbestimmte Zeit andauert.

4. Vorrichtung nach Anspruch 1, dadurch gekennzeichnet,
daß die Vorrichtung ferner
Mittel zum Verwenden der Luftbremse aufweist, wenn die Gleichstromspannung größer ist als der zweite Einrichtungswert und dies für länger als die vorbestimmte Zeit andauert.

5. Vorrichtung nach Anspruch 1, dadurch gekennzeichnet,
daß die Unterbrechersteuermittel den Unterbrecher im Unterbrechungsmodus steuern, wenn die erfaßte Spannung auf einen Wert sinkt, der gleich oder kleiner ist als ein dritter Einrichtungswert, welcher gleich oder größer ist als der erste Einrichtungswert und kleiner als der zweite Einrichtungswert.

## Revendications

1. Appareil de commande pour véhicule électrique comprenant un moteur électrique (8) qui entraîne un véhicule électrique, un dispositif de commande de moteur (7) qui commande ledit moteur électrique (8), un condensateur de filtrage (6) connecté entre ledit dispositif de commande du moteur (7) et une source d'alimentation, une résistance de freinage dynamique (12) et un découpeur de freinage dynamique (14) en connexion en série, connectés en parallèle avec ledit condensateur de filtrage (6) et des moyens (15) pour détecter la tension dudit condensateur de filtrage (6), et des moyens de commande de découpage (20 à 30) pour commander ledit découpeur de freinage dynamique (14) en mode de découpage si la valeur de tension détectée est supérieure ou égale à une première valeur de consigne qui est supérieure à la tension moyenne de ladite source d'alimentation,
caractérisé en ce que :
dans le mode de découpage, le rapport de conduction du découpeur (14) est commandé en fonction de la tension continue détectée, et en ce que les moyens de commande de découpage (20 à 30) ajustent un mode de pleine conduction si la valeur de tension détectée est supérieure ou égale à une deuxième valeur de consigne qui est supérieure à ladite première valeur de consigne, et
en ce que des moyens sont présents pour interrompre le fonctionnement dudit dispositif de commande de moteur si une valeur de tension détectée est supérieure ou égale à ladite deuxième valeur de consigne.

2. Appareil selon la revendication 1, caractérisé en ce que :
le dispositif de commande de moteur (7) est un onduleur et en ce que le moteur électrique (8) est un moteur à induction.

3. Appareil selon la revendication 1, caractérisé en ce qu'il comporte de plus :
des moyens pour provoquer l'ouverture d'un disjoncteur (2) dans le cas où le temps pendant lequel ladite tension continue est supérieure à ladite deuxième valeur de consigne dure plus longtemps qu'un temps prédéterminé.

4. Appareil selon la revendication 1, caractérisé en ce qu'il comporte de plus:
des moyens pour utiliser le frein à air dans le cas où le temps pendant lequel ladite tension continue est supérieure à ladite deuxième valeur de consigne dure plus longtemps que le temps prédéterminé.

5. Appareil selon la revendication 1, caractérisé en ce que :
les moyens de commande de découpage commandent le découpeur en mode de découpage dans le cas où la valeur de tension détectée chute à une valeur qui est inférieure ou égale à une troisième valeur de consigne qui est supérieure ou égale à ladite première valeur de consigne et inférieure à ladite deuxième valeur de consigne.
